## Europäisches Patentamt
## European Patent Office
## Office européen des brevets

(11) Veröffentlichungsnummer: **0 259 846**
**B1**

(12) **EUROPÄISCHE PATENTSCHRIFT**

(45) Veröffentlichungstag der Patentschrift:
13.09.89

(51) Int. Cl.⁴: **B23B 27/04**

(21) Anmeldenummer: **87113144.7**

(22) Anmeldetag: **09.09.87**

(54) Schneidwerkzeug zur spanabhebenden Metallbearbeitung wie Stechen, Anfasen, Plandrehen und Fräsen.

(30) Priorität: **10.09.86 DE 3630752**
**16.10.86 DE 3635193**

(43) Veröffentlichungstag der Anmeldung:
**16.03.88 Patentblatt 88/11**

(45) Bekanntmachung des Hinweises auf die Patenterteilung:
**13.09.89 Patentblatt 89/37**

(84) Benannte Vertragsstaaten:
**AT FR GB IT SE**

(56) Entgegenhaltungen:
**DE-A- 3 301 919**
**FR-A- 2 373 349**
**GB-A- 2 082 485**

(73) Patentinhaber: **ISCAR LTD., Industrial Zone North P.O. Box 34, Nahariya(IL)**

(72) Erfinder: **Pano, Jose, P.O.B. 65, IL-25227 Shave/Zion(IL)**

(74) Vertreter: **Engel, Friedrich-Wilhelm, Dipl.-Phys., Stephanienstrasse 32, D-7500 Karlsruhe(DE)**

**Beschreibung**

Die Erfindung betrifft ein Schneidwerkzeug für die spanabhebende Metallbearbeitung wie Stechen, Fasen, Fräsen und Plandrehen, gemäß dem Oberbegriff des Anspruchs 1.

Schneidwerkzeuge zur spanabhebenden Metallbearbeitung wie Stechen, Anfasen, Plandrehen und Fräsen, die aus einem schmalen Schneidenträger und einem oder mehreren auswechselbaren Schneideinsätzen bestehen, können in drei Gruppen eingeteilt werden. Die erste Gruppe umfaßt Schneidwerkzeuge, bei denen der keilförmige Schneideinsatz selbstklemmend zwischen nach außen divergierenden Sitzbacken gehalten wird.

Die zweite Gruppe von Werkzeugen zur spanabhebenden Metallbearbeitung wie Stechen, Anfasen, Plandrehen und Fräsen sieht vor, daß der keilförmige Schneideinsatz mindestens an einer Anlagefläche hinten eine Ausnehmung aufweist, in die ein Sicherungselement, in Sonderheit das Ende des Ringes, eingreift. (DE-OS 33 13 693).Die dritte Gruppe von Schneidwerkzeugen für den genannten Zweck umfaßt solche Werkzeuge, bei denen die Schneideinsätze mittels einer federnd schwenkbeweglichen Sitzbacke festgehalten werden, welche durch einen Schlitz vom übrigen Schneidenträger getrennt und nur über einen schmalen Steg mit diesem verbunden ist. Diese Sitzbacke wird durch ein im Schlitz angreifendes Spreizelement gegen die Anlagefläche des Schneideinsatzes gedrückt. Dieser Gattung gehört der Gegenstand vorliegender Erfindung an; durch Prospekte der Firma Valenite-M-LC-101 und die DE-OS 31 33 029 sind Schneidwerkzeuge nach dem Gattungsbegriff bekannt, wobei im Schlitz zwischen der federnd schwenkbeweglichen Sitzbacke und dem übrigen Schneidenträger als Spreizelement ein drehbarer Klemmnocken vorgesehen ist.

Diesem letztgenannten, bekannten Schneidwerkzeug gegenüber besteht die Aufgabe der Erfindung darin, das Verhältnis der aufzubringenden Kraft zur Ver stellung des Spreizelementes zu der durch dieses Element ausgeübten Klemmkraft auf die federnd schwenkbewegliche Sitzbacke günstig zu gestalten und die Einhaltung der gewählten Stellung des Spreizelementes zu gewährleisten, wobei die vorgesehenen Mittel konstruktiv einfach und leicht zu handhaben sind.

Zur Lösung dieser Aufgabe sieht die Erfindung die kennzeichnenden Merkmale des Hauptanspruchs vor. -Die Merkmale der Unteransprüche dienen der Verbesserung und Weiterentwicklung der Merkmale des Hauptanspruches.

Das Wesen der Erfindung offenbart sich darin, daß der keilförmige Ansatz oder die Ansätze des Ringes oder der Ringe ausschließlich oder im wesentlichen in Schwenkrichtung der federnd schwenkbeweglichen Sitzbacke wirksam wird bzw. werden und daher ein hoher Wirkungsgrad des Spreizelementes erzielbar ist. Mit anderen Worten, die Verstellung des den keilförmigen Ansatz oder die keilförmigen Ansätze tragenden Teils bedarf dem Bekannten gegenüber einer geringeren Kraft zum Verschwenken der beweglichen Sitzbacke. Ist im Gegensatz hierzu das Spreizelement als drehbarer Klemmnocken ausgebildet, so ist dessen Kraftrichtung nicht genau bestimmt; sie hängt davon ab, um welches Winkelmaß er um seine Achse in der Aufnahmebohrung gedreht wurde. Nur in den seltensten Fällen gelingt es, den Klemmnocken genau in die Schwenkrichtung der beweglichen Sitzbacke zu bringen. -Ist das Spreizelement als axial in der Aufnahmebohrung verstellbarer Konus gestaltet, so ist ein erheblicher Teil der auf zuwendenden Kraft nicht in Schwenkrichtung der federnd schwenkbeweglichen Sitzbacke gerichtet, sondern in jede von dieser Schwenkrichtung abweichende Richtung.

Auf der Zeichnung sind Ausführungsbeispiele des erfindungsgemäßen Werkzeuges und seiner Teile dargestellt und zwar zeigt

Figur 1 eine Seitenansicht des Schneidenträgers
Figur 2 die die Ringmutter spannende Schraube
Figur 3, 4 und 5 die Ringmutter in verschiedenen Ansichten
Figur 6 das komplette Schneidwerkzeug mit dem Schneideinsatz und dem Spreizelement
Figur 7 eine weitere Ausführungsform mit zwei sich gegenüberliegenden Ringmuttern annähernd gleicher Ausbildung und
Figur 8 die gewindelose Ringmutter in Nachbarschaft des Schraubenkopfes

Der Schneidenträger 1, auch Schwert genannt, weist einen flachen, rechteckigen Querschnitt mit der oberen Kante 2, der unteren Kante 3 und der zu dieser Kante rechtwinklig verlaufenden Stirnkante 4 auf. Von der Stirnkante 4 ausgehend ist die Aufnahmetasche 6 für den Schneideinsatz S in den Schneidenträger 1 eingearbeitet. Oberhalb der Aufnahmetasche 6 ist der Schneidenträger bei 5 zur Verbesserung des Spanabflusses abgeschrägt. Die Aufnahmetasche 6 wird begrenzt von der oberen Sitzbacke 7 mit der oberen prismatischen Anlagefläche 11 und der unteren Sitzbacke 8 mit der unteren prismatischen Anlagefläche 12, die sich parallel oder annähernd parallel gegenüberliegen. Der Schneideinsatz S ist in bekannter Weise mit entsprechenden prismatischen oberen und unteren Anlageflächen 19, 20 versehen, um ihm in der Aufnahmetasche 6 den notwendigen, seitlichen Halt zu verleihen.

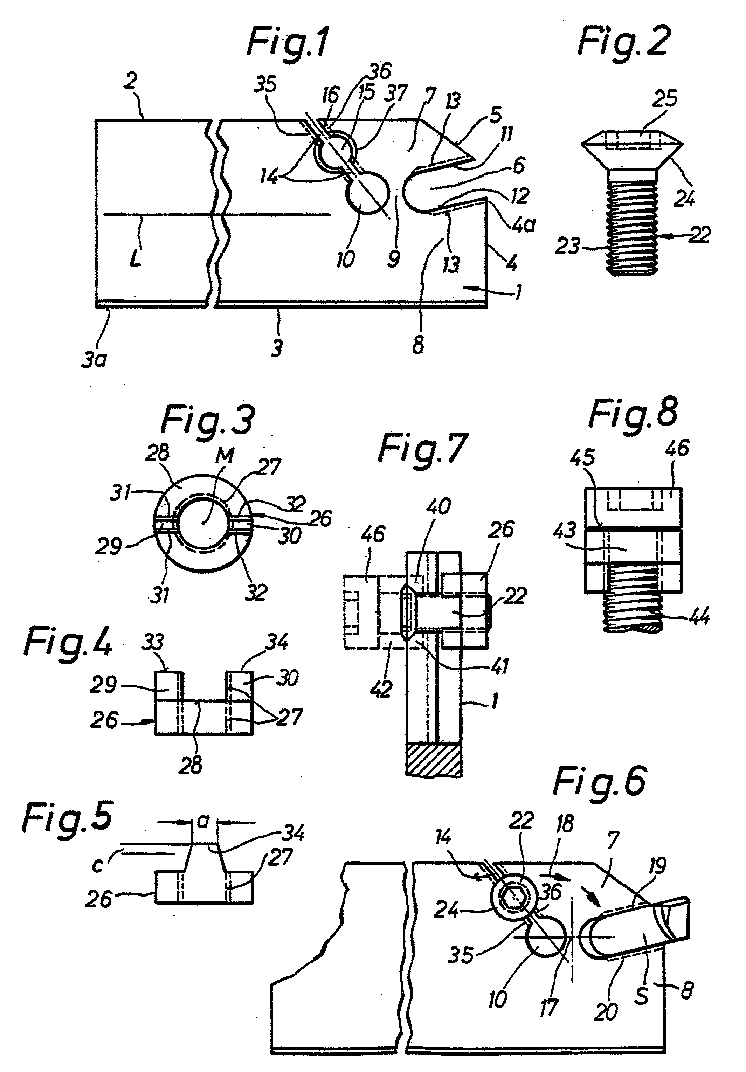

Ausgehend von der Querbohrung 10 durch den Halter 1 erstreckt sich unter dem Winkel von etwa 45° zur Halterlängsachse L ein Schlitz 14, der in eine nachstehend noch zu beschreibende etwa kreisförmige Erweiterung 15 mündet und seine geradlinige Fortsetzung bei 16 findet, um an der Oberkante 2 zu enden. Durch diesen Schlitz sowie die Bohrung 10 ist die Sitzbacke 7 lediglich über den Steg 9 mit dem mittleren Halterbereich verbunden und erhält eine federnde Schwenkbeweglichkeit um die Querachse 17 auf dem Steg 9 in Richtung des Pfeiles 18 derart, daß die Anlagefläche 11 gegen die Anlagefläche 19 des Schneideinsatzes S (vgl. Figur 6) gedrückt und dieser mit seiner Anlagefläche 20 gegen die Anlagefläche 12 gepreßt werden kann. So kann der Schneideinsatz S in der Aufnahmetasche 6 festgesetzt werden.

Um die Schwenkbewegung der Backe 7 in der beschriebenen Art zu erreichen, dienen die in den Figuren 2 bis 8 dargestellten Mittel. Sie bestehen aus einer Schraube 22 mit einem Gewindeschaft 23, der an einem kegeligen Kopf 24 endet. Zum Drehen der Schraube um ihre Längsachse dient der Innenmehrkant 25. -Auf das Gewinde 23 der Schraube 22 ist ein Ring 26 aufschraubbar, der runden oder mehreckigen Umfang aufweist und das Innengewinde 27 trägt. Die eine Stirnseite 28 des Ringes 26 weist im dargestellten Beispiel zwei bezüglich der Mittelachse M des Ringes 26 diametral gegenüberliegende Nocken in Form von Keilansätzen 29, 30 auf, die sich zu der der Stirnseite 28 des Ringes abgekehrten Seite hin verjüngen und hierdurch die Flanken 31, 32 entstehen lassen. Die Keilansätze 29, 30 weisen eine abgeflachte Kopfseite 33, 34 auf, deren Breite a (Figur 5) etwas geringer ist als die des Schlitzes 14 beidseits der Erweiterung 15 in seinem Ausgangszustand, so daß die beiden Keilansätze 29, 30, wie nachstehend noch beschrieben wird, etwa bis zur Tiefe c (Figur 5) Aufnahme in dem Schlitz 14 beidseits der Erweiterung 15 finden.

Wird für die Bewegung der federnd schwenkbeweglichen Backe 7 nur eine der Ringmuttern 26 verwendet, die das Innengewinde 27 aufweist, so besitzt der Schlitz 14 beidseits der Erweiterung 15 auf der einen Halterseite je eine Abschrägung 35, 36 die mit den Flanken 31, 32 der Keilansätze 29, 30 derart zusammenwirken, daß die genannten Flanken an den Abschrägungen 35, 36 in Querrichtung des Halters (senkrecht zur Zeichenebene in Figur 1 und 6) gleiten können, wenn die Schraube 22 die Ringmutter 26 gegen den Schraubenkopf anzieht und die Keilansätze 29, 30 die Sitzbacke 7 in Richtung des Pfeiles 18 beaufschlagen. Die Abschrägungen 35, 36 können zum äußeren Ende des Schlitzes 14 hin leicht konvergieren, etwa mit dem Winkel, um den die federnd schwenkbewegliche Sitzbacke 7 beim Anziehen des Spreizelementes gegen den Schneideinsatz S verschwenkt wird. Dann liegen die Flanken 31, 32 der Keilansätze 29, 30 im verspannten Zustand nach dem Verschwenken der federnd schwenkbeweglichen Backe 7 flächig an den Abschrägungen 35, 36 an.

Die Erweiterung 15 weist auf der den Abschrägungen 35, 36 abgekehrten Seite des Halters 1 eine konische Einsenkung 37 als Sitz für den kegeligen Kopf 24 der Schraube 22 auf. Dieser Sitz ist im Schnitt senkrecht zur Achse der Schrauben 22 schwächer gekrümmt als der Schraubenkopf 24. Dadurch liegt der konische Schraubenkopf 24 nur in einem schmalen Bereich senkrecht zur Ausrichtung des Schlitzes 14 an der konischen Fläche 37 an, so daß beim Anziehen der Schraube eine Krafte nur in diese Richtung entfaltet wird.

Statt des einen mit Keilansätzen 29, 30 versehenen Ringes 26 mit einem Innengewinde 27 können auch zwei Ringe Anwendung finden, von denen der eine wie beschrieben, als Ringmutter ausgebildet ist, während der zweite Ring gewindelos ist und bei entsprechender Länge der Schraube 22 gegen den flachen Kopf der Gewindeschraube anliegt. Ein zweiter solcher mit Keilansätzen 40, 41 versehener Ring 42 ist in Figur 7 und 8 dargestellt. Er weist die gewindelose Bohrung 43 auf, die den Schraubenschaftkopf 44 umschließt und gegen die Seite 45 der Flachschraube 46 anliegt. Die Keilansätze 40, 41 besitzten wiederum Flanken, die den Flanken 31, 32 der Keilansätze 29, 30 entsprechen. Der Schlitz 14 besitzt beidseitig der Erweiterung 15, die keine kegelige Einsenkung 37 aufzuweisen braucht, Abschrägungen, die den Abschrägungen 35, 36 auf den gegenüberliegenden Halterseite entsprechen und in gleicher Weise konvergieren können, so daß die Wirkung der Keilansätze 40, 41 die gleiche ist, wie die der Keilansätze 29, 30 des Gewinderinges 26.

Durch das Drehen der Schraube 22 und das axiale Anziehen des Ringes 26 oder das Zusammenziehen der Ringe 26 und 42 dringen die Keilansätze 29, 30 bzw. 29, 30 und 40, 41 in den Schlitz 14 beidseitig der Erweiterung 15 ein und wirken ausschließlich auf die Sitzbacke 7 in deren Schwenkrichtung (Pfeil 18). Eine Kraftausübung in anderer Richtung entfällt, so daß die aufzuwendende Kraft ausschließlich der Klemmwirkung der Backe 7 auf den Schneideinsatz S zugute kommt.

Die Anwendung eines Ringes 26 mit nur einem Keilansatz, der in einen Abschnitt des Schlitzes 14 zu einer Seite der Erweiterung 15 eingreift, ist möglich, jedoch verteilt sich dann nicht die auszuübende Keilkraft auf mehrere Flanken, insbesondere wie bei dem Ausführungsbeispiel nach Figur 7 und 9 auf vier Flanken der Keilansätze 29, 30 und 40, 41.

Der Anstellwinkel der Keilflanken 29, 30 ist so gewählt, daß vorzugsweise keine oder keine starke Selbsthemmung der Keilansätze 29, 30 bzw. 40, 41 an den Abschrägungen 35, 36 des Schlitzes 14 eintritt.

Das Tragstück in Form des Ringes 26 kann ersetzt werden durch eine runde oder mehreckige Scheibe oder einen Steg, die Abschnitte besitzen, die über den Schlitz 14 ragen und die Keilansätze 29, 30 tragen.

Hierbei können die Scheibe oder der Steg eine Bohrung besitzen, durch die der Schaft einer Schraube geführt ist oder die, wie der Ring 26, ein Gewinde aufweist. Auch kann die Scheibe oder der Steg mit einem Gewindeschaft verbunden sein und den Kopf einer so gestalteten Schraube bilden, die an dem der Scheibe oder dem Steg abgekehrten Ende mit Hilfe einer Mutter quer zu dem Schneidenträger 1 anspannbar oder lösbar ist.

## Patentansprüche

1. Schneidwerkzeug für die spanabhebende Metallbearbeitung wie Stechen, Fasen, Fräsen und Plandrehen, bestehend aus einem schmalen Schneidenträger und auswechselbaren Schneideinsätzen mit folgenden Merkmalen:

a) Der Schneidenträger (1) hat eine Aufnahmetasche (6) für die Schneideinsätze (S) mit oberen und unteren Sitzbacken (7, 8) mit annähernd parallelen oberen und unteren Anlageflächen (11, 12) für die Schneideinsätze (S).

b) Durch einen Schlitz (14) im Schneidenträger (1) bis nahe an den hinteren Abschluß der Aufnahmetasche (6) ist eine Sitzbacke (7) über einen schmalen Steg (9) federnd schwenkbeweglich, wobei der Schlitz eine Erweiterung (15) aufweist.

c) Die federnd schwenkbewegliche Sitzbacke (7) ist mit Hilfe eines Spreizelementes im Schlitz - (14) gegen den Schneideinsatz (S) anpreßbar, **dadurch gekennzeichnet,** daß das Spreizelement ein seitlich an einem Tragstück (Ring 26) angeordneter Keilansatz (29, 30) ist, der in den Schlitz (14) neben der Erweiterung eingreift und mit Hilfe einer durch die Erweiterung sich erstreckenden Schraube in den Schlitz (14) einziehbar ist.

2. Schneidwerkzeug nach Anspruch 1, **dadurch gekennzeichnet,** daß das Tragstück ein Ring (26) ist, der einen größeren Außendurchmesser als die etwa kreisförmige Erweiterung (15) hat und mittels einer Schraube (22) axial verstellbar ist.

3. Schneidwerkzeug nach Ansprüchen 1 und 2, **dadurch gekennzeichnet,** daß der Ring (26) eine Mutter der axialen Schraube (22) ist.

4. Schneidwerkzeug nach Ansprüchen 1 bis 3, **dadurch gekennzeichnet,** daß der Ring (26) zwei diametral gegenüberliegende gleiche Keilansätze (29, 30) trägt.

5. Schneidwerkzeug nach Ansprüchen 1 bis 4, **dadurch gekennzeichnet,** daß der oder die an die etwa kreisförmige Erweiterung (15) angrenzende Abschnitt bzw. Abschnitte des Schlitzes (14) mit auswärts gerichteten, den Flanken (31, 32) der Keilansätze (29, 30; 40, 41) des Ringes (26, 42) entsprechenden Abschrägungen (35, 36) versehen ist bzw. sind.

6. Schneidwerkzeug nach Anspruch 5, **dadurch gekennzeichnet,** daß die Abschrägungen (35, 36) der Kanten des Schlitzes (14) zum äußeren Schlitz-Ende hin leicht konvergieren.

7. Schneidwerkzeug nach Ansprüchen 2 bis 6, **dadurch gekennzeichnet,** daß die axiale Schraube (22) einen kegelförmigen Kopf (24) hat und der Sitz (37) des Kopfes (24) in der etwa kreisförmigen Erweiterung (15) entsprechend konisch ausgebildet ist.

8. Schneidwerkzeug nach Anspruch 7, **dadurch gekennzeichnet,** daß der Sitz (37) der etwa kreisförmigen Erweiterung (15) im Schnitt senkrecht zur axialen Schraube (22) schwächer gekrümmt ist als der Kopf (24) der axialen Schraube (22).

9. Schneidwerkzeug nach Ansprüchen 1 bis 8, **dadurch gekennzeichnet,** daß beidseitig der etwa kreisförmigen Erweiterung (15) je ein, einen Keilansatz oder zwei Keilansätze tragender Ring (26, 42) angeordnet ist, der eine Ring eine gewindelose Bohrung (43) und der andere Ring (26) als Mutter der Schraube (22) ausgebildet ist und der Schraubenkopf an dem gewindelosen Ring (42) anliegt.

10. Schneidwerkzeug nach Anspruch 1, **dadurch gekennzeichnet,** daß das Tragstück eine runde oder mehreckige Scheibe oder ein Steg ist, dessen über den Schlitz (14) ragender Abschnitt den Keilansatz (29, 30) trägt.

11. Schneidwerkzeug nach Anspruch 1 und 10, **dadurch gekennzeichnet,** daß die Scheibe oder der Steg eine Bohrung für eine Schraube aufweist.

12. Schneidwerkzeug nach Anspruch 1 und 10, **dadurch gekennzeichnet,** daß die Scheibe oder der Steg mit einem Gewindeschaft versehen ist.

## Claims

1. A cutting tool for metal-removing working such as punching, chamfering, milling and facing, comprising a narrow cutting edge carrier and exchangeable cutting inserts with the following characteristics:

a) the cutting edge carrier (1) has a receiving compartment (6) for the cutting inserts (S) with upper and lower bearing jaws (7, 8) with approximately parallel upper and lower bearing surfaces (11, 12) for the cutting inserts (S).

b) one bearing jaw (7) is resiliently swivellable by means of a narrow web (9) owing to a slit (14) in the cutting edge carrier (1) extending almost as far as the rear end of the receiving compartment (6), the slit comprising an extension (15),

c) the resiliently swivellable bearing jaw (7) can be pressed against the cutting insert (S) by means of an expansion member in the slit (14), characterized in that the expansion member is a wedge-shaped attachment (29, 30) arranged on the side of a carrier piece (ring 26), which wedge-shaped attachment (29, 30) engages in the slit (14) near the extension and can be drawn into the slit (14) with the aid of a screw extending through the extension.

2. A cutting tool according to claim 1, characterized in that the carrier piece is a ring (26), which has a larger outer diameter than the approximately circular extension (15) and can be axially adjusted by means of a screw (22).

3. A cutting tool according to claim 1 and claim 2, characterized in that the ring (26) is a nut for the axial screw (22).

4. A cutting tool according to any one of claims 1 to 3, characterized in that the ring (26) comprises two similar, diametrically opposed wedge-shaped attachments (29, 30).

5. A cutting tool according to any one of claims 1 to 4, characterized in that the section or sections of the slit (14) bordering the approximately circular extension (15) is or are provided with outwardly directed bevels (35, 36) corresponding to the flanks (31, 32) of the wedge-shaped attachments (29, 30; 40, 41) of the ring (26, 42).

6. A cutting tool according to claim 5, characterized in that the bevels (35, 36) of the edges of the slit (14) converge slightly towards the outer slit end.

7. A cutting tool according to any one of claims 2 to 6, characterized in that the axial screw (22) has a tapered head (24) and in that the bearing area (37) of the head (24) is formed correspondingly conically in the approximately circular extension (15).

8. A cutting tool according to claim 7, characterized in that the bearing area (37) of the approximately circular extension (15) is less curved in the section perpendicular to the axial screw (22) than the head (24) of the axial screw (22).

9. A cutting tool according to any one of claims 1 to 8, characterized in that on both sides of the approximately circular extension (15) there is arranged a ring (26, 42) carrying one or two wedge-shaped attachments, in that one of the rings is formed as a threadless bore (43) and the other (26) as a nut for the screw (22) and in that the screw head rests against the threadless ring (42).

10. A cutting tool according to claim 1, characterized in that the carrier piece is a round or polygonal disk or a bar, of which the section projecting over the slit (14) carries the wedge-shaped attachment (29, 30).

11. A cutting tool according to claim 1 and claim 10, characterized in that the disc or bar comprises a hole for a screw.

12. A cutting tool according to claim 1 and claim 10, characterized in that the disk or bar is provided with a threaded shank.

## Revendications

1. Outil de coupe pour l'usinage de métal par enlèvement de copeaux comme le tronçonnage, le chanfreinage, le fraisage et le planage, consistant en un élément porte-lames étroit et en des lames rapportées d'échange, ayant les caractéristiques suivantes:

a) L'élément porte-lames (1) comporte une poche (6) de réception des lames rapportées (S), munie de mâchoires d'appui supérieures (7) et inférieures (8) qui présentent des surfaces d'appui supérieures (11) et inférieures (12) sensiblement parallèles entre elles pour les lames rapportées (S).

b) Grâce à une fente (14) pratiquée dans l'élément porte-lames (1) jusqu'à proximité du fond de la poche de réception (6), une mâchoire d'appui (7) est capable d'un mouvement pivotant élastique, par l'intermédiaire d'un pont (9) étroit, ladite fente présentant un élargissement (15).

c) La mâchoire d'appui (7) capable d'un mouvement pivotant élastique est susceptible d'être serrée contre la lame rapportée (S) à l'aide d'un élément d'écartement dans la fente (14), caractérisé en ce que l'élément d'écartement est un talon conique (29, 30) qui est disposé sur un côté d'une pièce porteuse (bague 26) et s'engage dans la fente (14) à côté de l'élargissement et est apte à être tiré dans la fente (14) à l'aide d'une vis s'étendant à travers l'élargissement.

2. L'outil de coupe selon la revendication 1, caractérisé en ce que la pièce porteuse est une bague (26) qui a un diamètre extérieur plus grand que celui de l'élargissement sensiblement circulaire (15), et est déplaçable axialement au moyen d'une vis (22).

3. L'outil de coupe selon les revendications 1 et 2, caractérisé en ce que la bague (26) est un écrou de la vis axiale (22).

4. L'outil de coupe selon les revendications 1 à 3, caractérisé en ce que la bague (26) porte deux talons coniques (29, 30) identiques, diamétralement opposés.

5. L'outil de coupe selon les revendications 1 à 4, caractérisé en ce que la partie ou les parties de la fente (14) qui est, respectivement sont adjacente(s) à l'élargissement sensiblement circulaire (15) est, respectivement sont munie(s) de chanfreins (35, 36) orientés vers l'extérieur et correspondant aux flancs (31, 32) des talons coniques (29, 30; 40, 41) de la bague (26, 42).

6. L'outil de coupe selon la revendication 5, caractérisé en ce que les chanfreins (35, 36) des arêtes de la fente (14) sont légèrement convergents vers le bout extérieur de la fente.

7. L'outil de coupe selon les revendications 2 à 6, caractérisé en ce que la vis axiale (22) a une tête (24) de forme conique, et que le siège (37) de la tête (24) dans l'élargissement sensiblement circulaire (15) est réalisé avec une forme conique analogue.

8. L'outil de coupe selon la revendication 7, caractérisé en ce que le siège (37) de l'élargissement sensiblement circulaire (15), pris dans une section droite perpendiculaire à la vis axiale (22), a une courbure plus faible que celle de la tête (24) de la vis axiale (22).

9. L'outil de coupe selon les revendications 1 à 8, caractérisé en ce que de part et d'autre de l'élargissement sensiblement circulaire (15), une bague (26, 42) est montée qui porte un ou deux talons coniques; que l'une desdites bagues a un alésage (43) non taraudé et l'autre bague (26) est réalisée comme écrou de la vis (22); et que la tête de la vis prend appui sur la bague (42) sans filets.

10. L'outil de coupe selon la revendication 1, caractérisé en ce que la pièce porteuse est un disque circulaire ou polygonal ou une barrette dont la partie qui s'avance par-dessus la fente (14) porte le talon conique (29, 30).

11. L'outil de coupe selon les revendications 1 et 10, caractérisé en ce que le disque ou la barrette comporte un alésage pour une vis.

12. L'outil de coupe selon les revendications 1 et 10, caractérisé en ce que le disque ou la barrette est muni(e) d'une broche filetée.

Fig.1

Fig.2

Fig.3

Fig.7

Fig.8

Fig.4

Fig.5

Fig.6